## Europäisches Patentamt
## European Patent Office
## Office européen des brevets

(19)

(11) Publication number: **0 163 511**
**A1**

(12)
# EUROPEAN PATENT APPLICATION

(21) Application number: **85303723.2**

(22) Date of filing: **28.05.85**

(51) Int. Cl.⁴: **G 09 B 19/00**

(30) Priority: **29.05.84 US 614494**

(43) Date of publication of application:
**04.12.85 Bulletin 85/49**

(84) Designated Contracting States:
**DE FR GB**

(71) Applicant: **TEXAS INSTRUMENTS INCORPORATED**
**13500 North Central Expressway**
**Dallas Texas 75265(US)**

(72) Inventor: **Harkins, John K.**
**3329 Canyon Valley Trail**
**Plano Texas(US)**

(72) Inventor: **Morriss, Stephen H.**
**Route 2, Box 399**
**Celina Texas(US)**

(74) Representative: **Abbott, David John et al,**
**Abel & Imray Northumberland House 303-306 High**
**Holborn**
**London, WC1V 7LH(GB)**

(54) Apparatus for delivering procedural type instructions.

(57) An instruction delivery system (10) includes a portable base support section (12) and a remote man/machine interface (MMI) section (14). The portable base support system (12) comprises a carrying case housing (16) a host processor (30), plug-in type mass memory (28), interface control speech processor built-in-test indicators and main power supply. The man-machine interface section (14) includes an electrical connection cable (42), MMI controller, display controller, MMI voltage converter, headset microphone jack, speaker (46), keypad (48) and display (44). The mass memory (28) contains the maintenance instructions, the keypad (48) is used to input commands. The head set microphone is used to input voiced commands and to receive audible "text to speech" produced by the system. The MMI controller and; interface controller pass the commands to the host processor (30) (oral commands through the speech processor first for operator voice recognition). The host processor (30) controls the operation to access the mass memory (28) for proper responses and returns the responses including control signals through the speech processor for speech systhesis or through the interface control as appropriate to the MMI controller for selective passage of the responses to the speaker (46) for oral communication and through a display controller to the display (44) for visual communication with the operator.

./...

Fig. 1

# APPARATUS FOR DELIVERING PROCEDURAL TYPE INSTRUCTIONS

This invention relates to an apparatus for delivering procedural type instructions to personnel and more particularly to a maintenance, training, or manufacturing and operations or the like instruction delivery system apparatus.

In the past systems for delivering procedural type instructions for training personnel to perform maintenance work, for use in performing maintenance, or to run manufacturing equipment have included the use of manuals and video disks, and on-the-job training.

Such systems using manuals or other paper work have disadvantages not the least of which pertain to their bulkiness, the level of skill required to comprehend the material furnished, the accessibility of the material, including lost, torn and obliterated pages, and the difficulty of use during the performance of maintenance. The video disk as an existing storage media cannot be updated and is difficult to be used outside the training room. All these drawbacks result in higher error rates and increased performance time which culminate in increased costs and reduced operational readiness.

Accordingly it is an object of this invention to provide an efficient instructional type information delivery system.

Another object of the invention is to provide an instructional type information delivery system of minimum size, weight and power and with maximum information storage capacity and retrieval speed.

Still another object of the invention is to provide an instructional type information delivery system for substantially improving maintenance time requirements.

Yet another object of the invention is to provide an instructional type information delivery system providing visual and oral maintenance instructions in response to oral commands of maintenance personnel performing maintenance operations.

2

A further object of the invention is to provide an instructional type information system substantially meeting environmental and portability requirements.

Briefly stated the instructional type information system or job performance aid system is a portable device having user/machine speech recognition and speech synthesis capability and a display means for user visual communication. For purposes of description only and not by way of limitation the device described is a computer controlled maintenance information delivery system (MIDS).

Other objects and features of the invention will become more readily understood from the following detailed description when read in conjunction with the accompanying drawings in which:

Figure 1 is an isometric view of the instruction delivery system;

Figure 2 is a block diagram of the portable module section of the instructions delivery module section;

Figure 3 is a block diagram of the man/machine interface module section of the instructional delivery system;

Figure 4 is a block diagram of the host processor of the instruction delivery module section;

Figure 5 is a block diagram of the interface controller of the instruction delivery module section;

Figure 6 is a block diagram of the speech processor of the instruction delivery portable module section;

Figure 7 is a block diagram of the mass memory module of the instruction delivery module section;

Figure 8 is a block diagram of the interface controller of the man/machine interface module section; and

Figure 9 is a block diagram of the display controller memory of the man/machine interface module section.

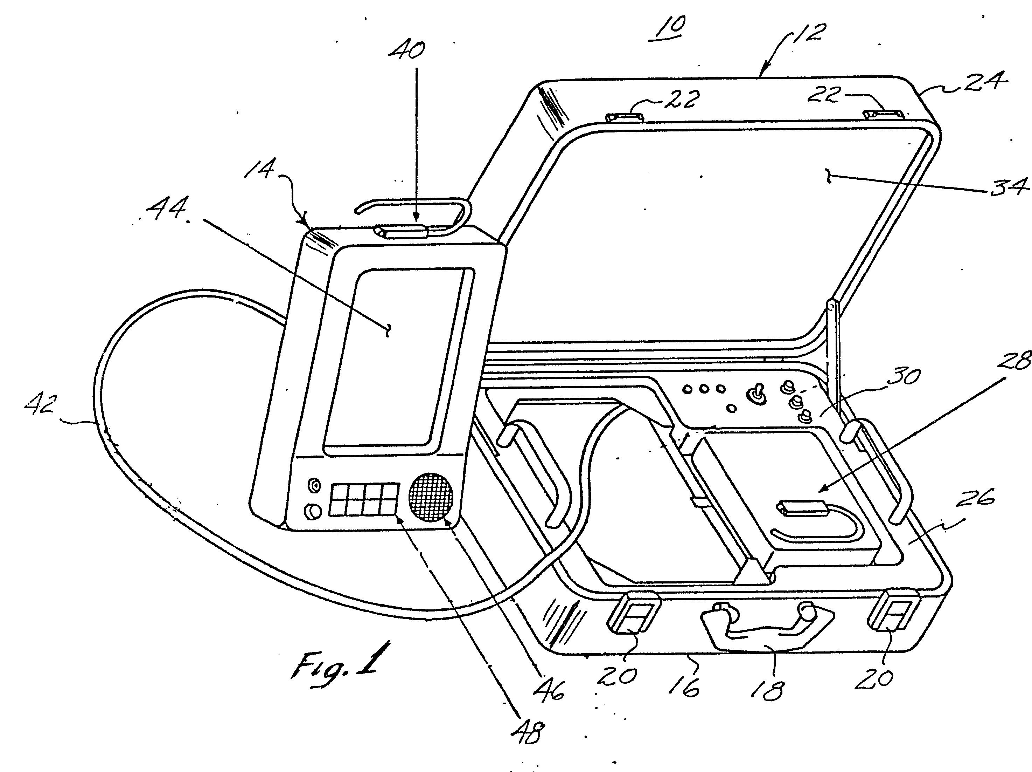

Referring now to Figure 1, the portable instruction information delivery system apparatus 10 consists of two major sections: a portable instruction delivery system section 12 and a man/machine interface section 14.

The portable instruction delivery system modular section 12 includes a carrying case (housing) 16 having a compartment supporting a carrying handle 18. Handle 18 is positioned between a pair of lock hasps 20. The lock hasps engage a pair of corresponding staples 22 mounted on a hinged lid compartment 24 for securing the hinged lid 24 to the compartment 16.

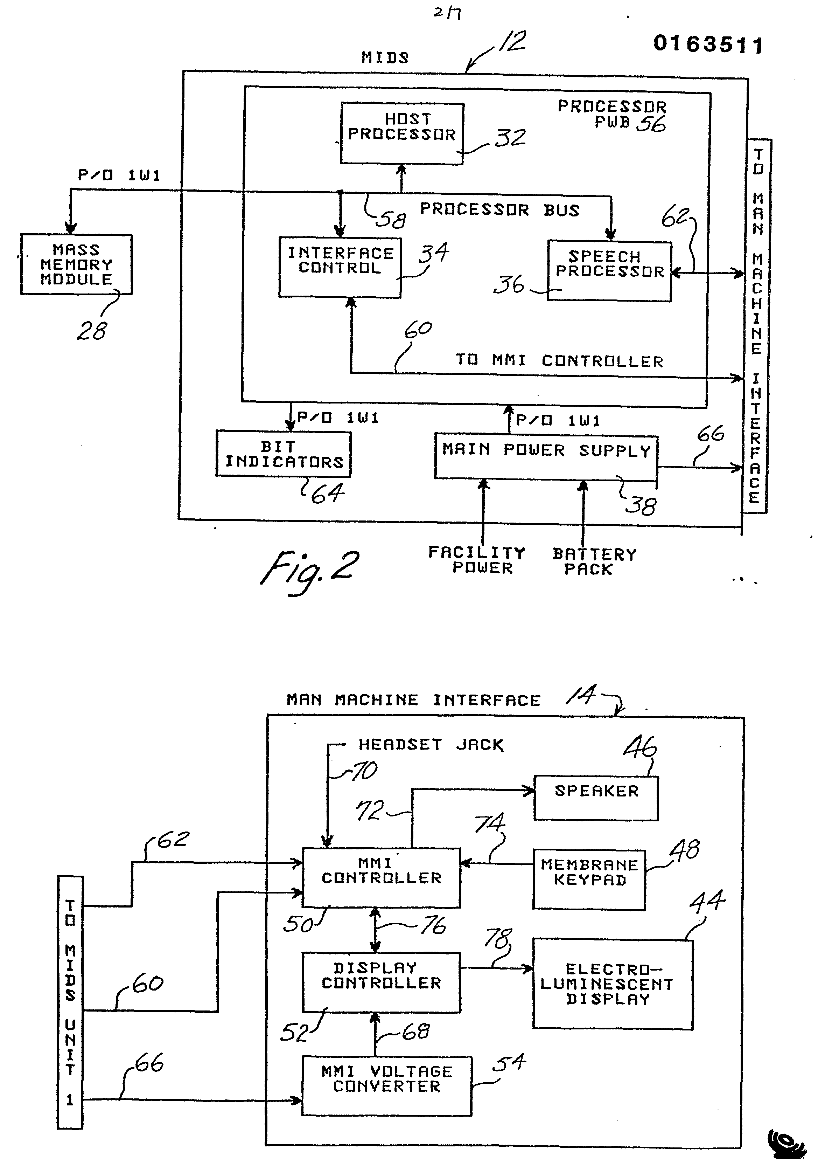

The compartment 16 houses a removable tray 26 leaving topside areas for a plug-in mass memory unit 28, man/machine interface module section 14 with jack for a headset (not shown) and a control panel 30 having a power ON/OFF, built-in-test (BIT) and battery power level indicators; and a lower area for a main power supply 38 and a printed wiring board 56 (Fig. 2) with a host processor 32, interface control 34 and speech processor 36 electrically attached thereto.

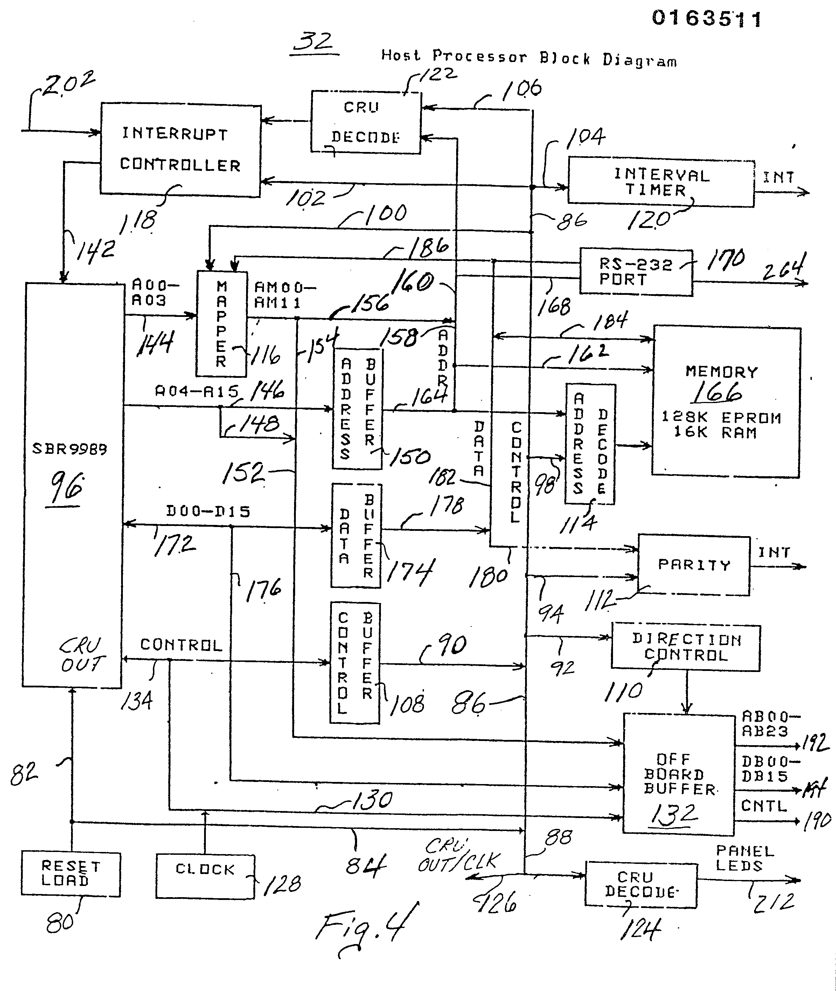

The man/machine interface module section 14 (Fig. 1) has a portable housing 40 connected by a cable 42 to the instruction delivery system module section 12. The housing 40 has a display 44, speaker 46 and keypad 48 mounted on its front panel above areas for a man/machine controller 50 (Fig. 3), display controller 52 and voltage converter 54.

## INSTRUCTION DELIVERY MODULE (SECTION)

Referring now to Figure 2, the instruction delivery module 12 comprises a processor printed wiring board (PWB) 56, mass memory module 28, processor 32, interface control 34, speech processor 36, main power supply 38 and built-in-test (BIT) indicators 64. The host processor 32, interface control 34 and speech processor 36 are affixed to the processor PWB 56. A transceiver (bus) 58 interconnects the host processor 32, mass memory module 28, interface control 34 and speech processor 36. Transceiver leads 60 and 62 interconnect the interface control 34 and speech processor 36, respectively, to the man/machine interface (MMI) controller 50 (Fig. 3) of the MMI module 14.

The built-in-test indicators 64 (Fig. 2) are connected to the PWB 56 for testing the operativeness of the system on power

4

up and the main power supply 38 is selectively connected to receive a power line source of power and a battery (dc) pack. The main power supply (voltage regulator) provides proper voltages for the active elements of the instruction delivery system module 12 and through leads 66 of the cable 42 to the MMI voltage converter 54 which provides proper voltages for the active elements for the man/machine interface 14.

## MAN/MACHINE INTERFACE MODULE (SECTION)

Referring now to Figure 3, the man/machine interface (MMI) module 14 includes the MMI controller 50, display controller 52, voltage converter 54, display 44, speaker 46 and keypad 48.

The MMI display controller 52 is connected by lead 68 to the MMI voltage converter 54 for operating power. The MMI controller 50 is connected by leads 70, 72, 74 and 76, respectively, to the headset jack, speaker 46, keypad 48 and display controller 52 for controlling their communication over transceivers 60 and 62 with the interface control 34 (Fig. 2) and speech processor 36 of the instruction delivery system 12. The display 44 is connected by bus 78 to the display controller 52 for receiving display generating X, Y signals.

## KEYPAD

The keypad 48 is, for example, a membrane type keypad having one key for each command option available. Key legends are: last, next, backup, select, yes, no, menu and speak. The keypad is sealed from the environment with the switch legends imprinted on an embossed graphic overlay.

## DISPLAY UNIT

The display 44 is, for example, an electroluminescent flat panel display on a driver board; it is a 512 row by 352 column X-Y addressed matrix.

## OPERATION

The instruction information delivery system 10 operations are primarily controlled by the host processor 32 (Fig. 2) using memory mapped, CRU and/or interrupt driver input/output. The system memory map is set forth in Table 1.

5

Thus, for example, when a mass memory module containing maintenance software for a particular piece of equipment is plugged in and power turned on, the maintenance person presses the menu key and options are displayed as follows: mark position, return, speak all the time, speak as required speak cautions only, and enroll speech. The operator moves the cursor to the desired option, for example, "enroll speech" by pressing the "last" key or "next" key, for moving the cursor, respectively up and down to the "enroll speech" position and pushing the "select" key. The system then displays the 8 command words and prompts the user to say each word aloud into the microphone. Thereafter the operator uses the microphone to speak the key labels into the speech processor. Thereafter the system responds to the operation's vocal commands or manual input on the keypad as follows, "last" or "next" to position the cursor on a item menu, and "select" to display the item. The operator repeats these steps to display an instruction level commensurate to his skill and commands the unit to speak. The unit then speaks the maintenance steps one at a time passing on to the next step on the command "next". The operator responds to any questions posed by the unit with a "Yes" or "No" answer and the unit proceeds in light of the answer. With these commands and options the operator receives complete instructions to troubleshoot a problem and fix it. The instructions being given at a level commensurate with the operator's skill.

### HOST PROCESSOR

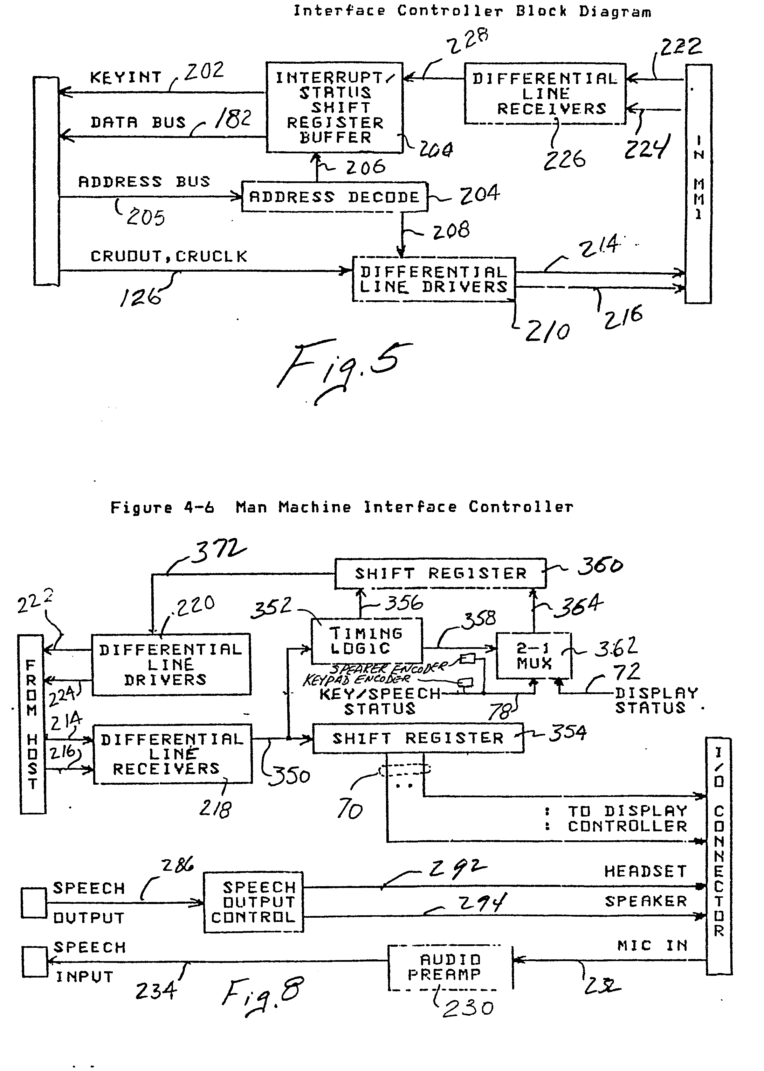

The host processor 32 (Fig. 4) includes a reset load 80 connected to the junction of leads 82 and 84. Lead 82 connects the reset load 80 to a data processor 96; whilst, lead 84 is connected to the junctions of leads 86 and 88. Lead 86 is connected to the junction of leads 90, 92, 94, 98, 100, 102, 104 and 106 which are connected respectively to the output terminal of buffer control 108, input terminals of direction control 110, parity check 112, control terminals of address decoder 114 and input terminals of mapper 116, interrupt controller 118, interval timer 120 and CRU decoder 122. Whilst lead 88 is connected to CRU decoder 124 and CRU OUT/CRU clock output terminals 126.

To reduce substantially the number of leads on the drawing and because the clock 128 and data processor's CRU out terminal are connected to the same elements the clock 128 is shown connected to transceiver 130 interconnecting an off board buffer 132 and transceiver 134. Transceiver 134 interconnects the data processor's CRU out terminal to the buffer control 108 whose output is connected by lead 90 to the reset leads to the previously described elements 110, 112, 114, 116, 118, 120, 122 and 124 and CRU out/clk output terminal 126.

The interrupt controller 118 has an output terminal connected by lead 142 to the data processor 96. The data processor 96 has output terminals A00-A03 connected by bus 144 to the mapper 116 and output terminals A04-A15 connected to the junction of buses 146 and 148. Bus 146 is connected to address buffer 150; while bus 148 is connected to the junction of busses 152 and 154. Bus 152 is connected to the off board buffer 132 and bus 154 is connected to bus 156. Bus 156 is connected to output terminals AM00-AM11 of mapper 116 and to the junction of busses 158 and 160. Bus 158 is connected to the junction of busses 162 and 164 connected, respectively, to memory 166 and to the output terminals of address buffer 150 and input terminals of address decoder 114. Whilst, bus 160 is connected to the CRU decoder 122 and to bus 168 connected to RS-232 port 170. Finally the data processor 96 has terminals D00-D15 connected by transceiver bus 172 to input terminals of data buffer 174 and bus 176 to the off board buffer 138.

The data buffer 174 has its output terminals connected by bus 178 to busses 180 and 182. Bus 180 is connected to the parity circuit 112, whilst, bus 182 is connected to transceiver bus 188 interconnecting memory 166 and bus 186. Bus 186 interconnects the RS-232 Port 170 to the mapper 116.

The interrupt controller 118 acting in response to interrupt signals on lead 202 synchronizes up to fifteen prioritized interrupts which are individually maskable. Level 0 interrupt will be generated at power up by on board circuitry at the reset pin of the data processor 96. Detailed interrupt assignments are specified in the processor memory map of Table 1. Other interrupts are outputted by the interval timer 120 at equally spaced intervals when the interval timer is activated and by the parity circuit 112 for the memory 166 when a parity error is detected.

The mapper 116 is, for example, a 74LS610 memory mapper sold by Texas Instruments Incorporated. The mapper expands the 0-15 bit address to a 0-23 bit address. The mapper contains sixteen twelve bit registers selected by the top four processor 96 address lines during normal memory fetches. The memory registers are addressed into memory 166. The top four lines of the expanded address bus are decoded by address decoder 114 to generate eight active low bank selects.

The CRU decoders 122 and 124 decode the data processor's control register unit control signals for flags and devices of the host processor. All CRU controls are presented at the output connector bus 212 of the CRU decoder 124 for off board flags. (See Table 1 for a detailed CRU memory map)

The off board buffer 132 buffers the mass memory module 28 (Fig. 3) AB00-AB23 address and DB00-DB15 lines 192 and 194, respectively, for increased circuit protection and drive capacity.

8

## TABLE 1

### PROCESSOR MEMORY MAP

### SYMBOLIC NAMES AND LOCATIONS

#### MEMORY MAPPED INPUTS

| SYMBOLIC NAME | ADDRESS | DESCRIPTION | VALUE |
|---|---|---|---|
| WP_Lev0_Int | 000000 | wp level0 int | 16 bits=wp lvl0 int location |
| PC_Lev0_Int | 000002 | pc level0 int | 16 bits=pc lvl0 int location |
| WP_Lev1_Int | 000004 | wp level1 int | 16 bits=wp lvl1 int location |
| PC_Lev1_Int | 000006 | wp level1 int | 16 bits=pc lvl1 int location |
| WP_Lev2_Int | 000008 | wp level2 int | 16 bits=wp lvl2 int location |
| PC_Lev2_Int | 00000A | wp level2 int | 16 bits=pc lvl2 int location |
| WP_Lev3_Int | 00000C | wp level3 int | 16 bits=wp lvl3 int location |
| PC_Lev3_Int | 00000E | wp level3 int | 16 bits=pc lvl3 int location |
| WP_Lev4_Int | 000010 | wp level4 int | 16 bits=wp lvl4 int location |
| PC_Lev4_Int | 000012 | wp level4 int | 16 bits=pc lvl4 int location |
| WP_Lev5_Int | 000014 | wp level5 int | 16 bits=wp lvl5 int location |
| PC_Lev5_Int | 000016 | wp level5 int | 16 bits=pc lvl5 int location |
| WP_Lev6_Int | 000018 | wp level6 int | 16 bits=wp lvl6 int location |
| PC_Lev6_Int | 00001A | wp level6 int | 16 bits=pc lvl6 int location |
| WP_Lev7_Int | 00001C | wp level7 int | 16 bits=wp lvl7 int location |
| PC_Lev7_Int | 00001E | wp level7 int | 16 bits=pc lvl7 int location |
| WP_Lev8_Int | 000020 | wp level8 int | 16 bits=wp lvl8 int location |
| PC_Lev8_Int | 000022 | wp level8 int | 16 bits=pc lvl8 int location |
| WP_Lev9_Int | 000024 | wp level9 int | 16 bits=wp lvl9 int location |
| PC_Lev9_Int | 000026 | wp level9 int | 16 bits=pc lvl9 int location |
| WP_Lev10_Int | 000028 | wp level10int | 16 bits=wp lvl10 int location |
| PC_Lev10_Int | 00002A | wp level10int | 16 bits=pc lvl10 int location |
| WP_Lev11_Int | 00002C | wp level11int | 16 bits=wp lvl11 int location |
| PC_Lev11_Int | 00002E | wp level11int | 16 bits=pc lvl11 int location |
| WP_Lev12_Int | 000030 | wp level12int | 16 bits=wp lvl12 int location |
| PC_Lev12_Int | 000032 | wp level12int | 16 bits=pc lvl12 int location |
| WP_Lev13_Int | 000034 | wp level13int | 16 bits=wp lvl13 int location |
| PC_Lev13_Int | 000036 | wp level13int | 16 bits=pc lvl13 int location |
| WP_Lev14_Int | 000038 | wp level14int | 16 bits=wp lvl14 int location |
| PC_Lev14_Int | 00003A | wp level14int | 16 bits=pc lvl14 int location |
| WP_Lev15_Int | 00003C | wp level15int | 16 bits=wp lvl15 int location |
| PC_Lev15_Int | 00003E | wp level15int | 16 bits=pc lvl15 int location |
| MMI_Stat_Wd | | mmi status word MS 6 bits=status | |

```
Graph_Code_Addr              graphics code   19 bits=beginning of code
Text_Code_Addr               text proc code  19 bits=beginning of code
Serv_Cont_Block              speech recog.   19 bits=address of block
PSP_Stat_Control             speech recog.   19 bits=address of status/control
Speech_Proc_Code             speech synth.   19 bits=beginning of code
Synth_Rule Set               speech synth.   19 bits=beginning of rule table
Allophone_Libr.              speech synth.   19 bits=beginning of data
Interr_Proc_Code             interrupt proc. 19 bits=beginning of code
Mem_Man_Code                 memory manager  19 bits=beginning of code
Exec_Addr                    Executive       19 bits=beginning of code
Mem_Mapped_IO                I/O Port        19 bits=address of Port
RAM_Address                  RAM             19 bits=address of read/write
                                                             memory
BI_Test_Code                 built_in test   19 bits=address of code
Sys_Init_Code                system init.    19 bits=address of code

Map_Reg00   004000    map register 0    LS 12 bits=map reg contents
Map_Reg01   004002    map register 1    LS 12 bits=map reg contents
Map_Reg02   004004    map register 2    LS 12 bits=map reg contents
Map_Reg03   004006    map register 3    LS 12 bits=map reg contents
Map_Reg04   004008    map register 4    LS 12 bits=map reg contents
Map_Reg05   00400A    map register 5    LS 12 bits=map reg contents
Map_Reg06   00400C    map register 6    LS 12 bits=map reg contents
Map_Reg07   00400E    map register 7    LS 12 bits=map reg contents
Map_Reg08   004000    map register 8    LS 12 bits=map reg contents
Map_Reg09   004002    map register 9    LS 12 bits=map reg contents
Map_Reg10   004004    map register10    LS 12 bits=map reg contents
Map_Reg11   004006    map register11    LS 12 bits=map reg contents
Map_Reg12   004008    map register12    LS 12 bits=map reg contents
Map_Reg13   00400A    map register13    LS 12 bits=map reg contents
Map_Reg14   00400C    map register14    LS 12 bits=map reg contents
Map_Reg15   00400E    map register15    LS 12 bits=map reg contents

VSP_Status    034000    VSP status reg   MS 3 bits=stat reg contents

VSP Read      034002    start new read cycle

VRP_Read_Stat 038000    read stat byte   MS 8 bits=stat byt contents

VRP Write     038002    write command location in dual port memory

VSP Write     038010    VSP data reg     LPC data or bit4=reset or speak ext

VRP_Write_cb  03bffb    wrt ctl bits     bit 8 = interrupt enable
                                         bit 9 = VRP interrupt
                                         bit 10 = SW reset
                                         bit 11 = clear interrupt
```

10

## MEMORY MAPPED OUTPUTS

| SYMBOLIC NAME | ADDRESS | DESCRIPTION | VALUE |
|---|---|---|---|
| Map_Reg00 | 004000 | map register 0 | LS 12 bits=map reg contents |
| Map_Reg01 | 004002 | map register 1 | LS 12 bits=map reg contents |
| Map_Reg02 | 004004 | map register 2 | LS 12 bits=map reg contents |
| Map_Reg03 | 004006 | map register 3 | LS 12 bits=map reg contents |
| Map_Reg04 | 004008 | map register 4 | LS 12 bits=map reg contents |
| Map_Reg05 | 00400A | map register 5 | LS 12 bits=map reg contents |
| Map_Reg06 | 00400C | map register 6 | LS 12 bits=map reg contents |
| Map_Reg07 | 00400E | map register 7 | LS 12 bits=map reg contents |
| Map_Reg08 | 004000 | map register 8 | LS 12 bits=map reg contents |
| Map_Reg09 | 004002 | map register 9 | LS 12 bits=map reg contents |
| Map_Reg10 | 004004 | map register10 | LS 12 bits=map reg contents |
| Map_Reg11 | 004006 | map register11 | LS 12 bits=map reg contents |
| Map_Reg12 | 004008 | map register12 | LS 12 bits=map reg contents |
| Map_Reg13 | 00400A | map register13 | LS 12 bits=map reg contents |
| Map_Reg14 | 00400C | map register14 | LS 12 bits=map reg contents |
| Map_Reg15 | 00400E | map register15 | LS 12 bits=map reg contents |

## CRU INPUTS

| SYMBOLIC NAME | ADDRESS | DESCRIPTION | VALUE | |
|---|---|---|---|---|
| MMU_Insert_Int | 0002 | interrupt lvl 1 | 0=not active | 1=active |
| Par_Error_Int | 0004 | interrupt lvl 2 | 0=not active | 1=active |
| Interval_Tim_Int | 0006 | interrupt lvl 3 | 0=not active | 1=active |
| | 0008 | interrupt lvl 4 | 0=not active | 1=active |
| BIT_Int5 | 000A | interrupt lvl 5 | 0=not active | 1=active |
| Spe_Synth_Int | 000C | interrupt lvl 6 | 0=not active | 1=active |
| Keypad_Int | 000E | interrupt lvl 7 | 0=not active | 1=active |
| Spe_Recog_Int | 0010 | interrupt lvl 8 | 0=not active | 1=active |
| | 0012 | interrupt lvl 9 | 0=not active | 1=active |
| MMU_Remov_Int | 0014 | interrupt lvl 10 | 0=not active | 1=active |
| Low_Pwr_Int | 0016 | interrupt lvl 11 | 0=not active | 1=active |
| BIT_Int12 | 0018 | interrupt lvl 12 | 0=not active | 1=active |
| | 001A | interrupt lvl 13 | 0=not active | 1=active |
| BIT-Loop-Back | 001C | interrupt lvl 14 | 0=not active | 1=active |
| RS232 | 001E | interrupt lvl 15 | 0=not active | 1=active |
| | 0020 | | | |
| Int_Code_Ic3 | 0022 | interrupt code ic3 | 0=off | 1=on |
| Int_Code_IC2 | 0024 | interrupt code ic2 | 0=off | 1=on |
| Int_Code_IC1 | 0026 | interrupt code ic1 | 0=off | 1=on |
| Int_Code_IC0 | 0028 | interrupt code ic0 | 0=off | 1=on |

RS232

11

CRU OUTPUTS

| SYMBOLIC NAME | ADDRESS | DESCRIPTION | VALUE |
|---|---|---|---|
| MMU_Insert_Int | 0002 | interrupt lvl 1 | O=disable mask 1=enable mask |
| Sys_Errors_Int | 0004 | interrupt lvl 2 | O=disable mask 1=enable mask |
| Interval_Tim_Int | 0006 | interrupt lvl 3 | O=disable mask 1=enable mask |
| | 0008 | interrupt lvl 4 | O=disable mask 1=enable mask |
| BIT_Int5 | 000A | interrupt lvl 5 | O=disable mask 1=enable mask |
| Spe_Synth_Int | 000C | interrupt lvl 6 | O=disable mask 1=enable mask |
| Keypad_Int | 000E | interrupt lvl 7 | O=disable mask 1=enable mask |
| Spe_Recog_Int | 0010 | interrupt lvl 8 | O=disable mask 1=enable mask |
| | 0012 | interrupt lvl 9 | O=disable mask 1=enable mask |
| MMU_Remov_Int | 0014 | interrupt lvl 10 | O=disable mask 1=enable mask |
| Low_Pwr_Int | 0016 | interrupt lvl 11 | O=disable mask 1=enable mask |
| BIT_Int12 | 0018 | interrupt lvl 12 | O=disable mask 1=enable mask |
| | 001A | interrupt lvl 13 | O=disable mask 1=enable mask |
| BIT-Loop-Back | 001C | interrupt lvl 14 | O=disable mask 1=enable mask |
| RS232 | 001E | interrupt lvl 15 | O=disable mask 1=enable mask |
| | 0020 | | |
| Int_Code_IC3 | 0022 | interrupt code ic3 | not used by SW |
| Int_Code_IC2 | 0024 | interrupt code ic2 | not used by SW |
| Int_Code_IC1 | 0026 | interrupt code ic1 | not used by SW |
| Int_Code_IC0 | 0028 | interrupt code ic0 | |
| Acknow_Int1 | 0042 | acknowledge intpt 1 | O=disable 1=enable |
| Acknow_Int2 | 0044 | acknowledge intpt 2 | O=disable 1=enable |
| Acknow_Int3 | 0046 | acknowledge intpt 3 | O=disable 1=enable |
| Acknow_Int4 | 0048 | acknowledge intpt 4 | O=disable 1=enable |
| Acknow_Int5 | 004A | acknowledge intpt 5 | O=disable 1=enable |
| Acknow_Int6 | 004C | acknowledge intpt 6 | O=disable 1=enable |
| Acknow_Int7 | 004E | acknowledge intpt 7 | O=disable 1=enable |
| Acknow_Int8 | 0040 | acknowledge intpt 8 | O=disable 1=enable |
| Acknow_Int9 | 0042 | acknowledge intpt 9 | O=disable 1=enable |
| Acknow_Int10 | 0044 | acknowledge intpt 10 | O=disable 1=enable |
| Acknow_Int11 | 0046 | acknowledge intpt 11 | O=disable 1=enable |
| Acknow_Int12 | 0048 | acknowledge intpt 12 | O=disable 1=enable |
| Acknow_Int13 | 004A | acknowledge intpt 13 | O=disable 1=enable |
| Acknow_Int14 | 004C | acknowledge intpt 14 | O=disable 1=enable |
| Acknow_Int15 | 004E | acknowledge intpt 15 | O=disable 1=enable |
| | 0060 | | |
| Stimul_Int1 | 0062 | stimulate intpt 1 | O= 1=enable |
| Stimul_Int2 | 0064 | stimulate intpt 2 | O= 1=enable |
| Stimul_Int3 | 0066 | stimulate intpt 3 | O= 1=enable |
| Stimul_Int4 | 0068 | stimulate intpt 4 | O= 1=enable |

12

| | | | | |
|---|---|---|---|---|
| Stimul_Int5 | 006A | stimulate intpt 5 | O= 1=enable | used by B |
| Stimul_Int6 | 006C | stimulate intpt 6 | O= 1=enable | |
| Stimul_Int7 | 006E | stimulate intpt 7 | O= 1=enable | |
| Stimul_Int8 | 0070 | stimulate intpt 8 | O= 1=enable | |
| Stimul_Int9 | 0072 | stimulate intpt 9 | O= 1=enable | |
| Stimul_Int10 | 0074 | stimulate intpt 10 | O= 1=enable | |
| Stimul_Int11 | 0076 | stimulate intpt 11 | O= 1=enable | |
| Stimul_Int12 | 0078 | stimulate intpt 12 | O= 1=enable | used by B |
| Stimul_Int13 | 007A | stimulate intpt 13 | O= 1=enable | |
| Stimul_Int14 | 007C | stimulate intpt 14 | O= 1=enable | |
| Stimul_Int15 | 007E | stimulate intpt 15 | O= 1=enable | |

| | | | |
|---|---|---|---|
| BIT_Lt1 | 0080 | BIT light1 | O=on 1=off |
| BIT_Lt2 | 0082 | BIT light2 | O=on 1=off |
| BIT_Lt3 | 0084 | BIT light3 | O=on 1=off |
| BIT_Infc_Rbd | 0086 | Rebound Switch | O=on 1=off |
| BIT_Rbd_Int_sel | 0088 | Rebound Interrupt Select | |
| BIT_mem int sel | 008A | Mass Memory interrupt select | O=off 1=on |
| BIT_Analog_Sw | 008C | BIT analog switch | O=normal op 1=test |
| BIT_Par_Err_Sel | 008E | BIT parity error select | O=normal op 1=test |

| | | | |
|---|---|---|---|
| CW_ID1 | 0100 | ident (display mode) | O=ID 1=undefined |
| CW_ID2 | 0102 | ident (display mode) | O=ID 1=undefined |
| CW_ID3 | 0104 | ident (display mode) | O=undefined 1=ID |
| CW_Key_Stat | 0106 | keypad status | O=keypad stat 1=display stat |
| CW_Disp_Code1 | 0108 | display code 1 | O=low 1=high |
| CW_Disp_Code1 | 010A | display code 2 | O=undef 1=write screen |
| CW_Disp_Code1 | 010C | display code 3 | O=undef 1=write pixel |

| | | | |
|---|---|---|---|
| Disp_Bitx1 | 0180 | bit 1 of 9bit X addr | O=enable 1=disable |
| Disp_Bitx2 | 0182 | bit 2 of 9bit X addr | O=enable 1=disable |
| Disp_Bitx3 | 0184 | bit 3 of 9bit X addr | O=enable 1=disable |
| Disp_Bitx4 | 0186 | bit 4 of 9bit X addr | O=enable 1=disable |
| Disp_Bitx5 | 0188 | bit 5 of 9bit X addr | O=enable 1=disable |
| Disp_Bitx6 | 018A | bit 6 of 9bit X addr | O=enable 1=disable |
| Disp_Bitx7 | 018C | bit 7 of 9bit X addr | O=enable 1=disable |
| Disp_Bitx8 | 018E | bit 8 of 9bit X addr | O=enable 1=disable |
| Disp_Bitx9 | 0190 | bit 9 of 9bit X addr | O=enable 1=disable |

| | | | |
|---|---|---|---|
| Disp_Bity1 | 01A0 | bit 1 of 9bit Y addr | O=enable 1=disable |
| Disp_Bity2 | 01A2 | bit 2 of 9bit Y addr | O=enable 1=disable |
| Disp_Bity3 | 01A4 | bit 3 of 9bit Y addr | O=enable 1=disable |
| Disp_Bity4 | 01A6 | bit 4 of 9bit Y addr | O=enable 1=disable |
| Disp_Bity5 | 01A8 | bit 5 of 9bit Y addr | O=enable 1=disable |
| Disp_Bity6 | 01AA | bit 6 of 9bit Y addr | O=enable 1=disable |
| Disp_Bity7 | 01AC | bit 7 of 9bit Y addr | O=enable 1=disable |

13

| Disp_Bity8 | 01AE | bit 8 of 9bit Y addr | 0=enable | 1=disable |
|---|---|---|---|---|
| Disp_Bity9 | 01B0 | bit 9 of 9bit Y addr | 0=enable | 1=disable |
| | 1FE0 | MPTS CRU | see MPTS interface doc | |
| | 1FE2 | MPTS CRU | see MPTS interface doc | |
| | 1FE4 | MPTS CRU | see MPTS interface doc | |
| | 1FE6 | MPTS CRU | see MPTS interface doc | |
| | 1FE8 | MPTS CRU | see MPTS interface doc | |
| | 1FEA | MPTS CRU | see MPTS interface doc | |
| | 1FEC | MPTS CRU | see MPTS interface doc | |
| | 1FEE | MPTS CRU | see MPTS interface doc | |
| | 1FE0 | MPTS CRU | see MPTS interface doc | |
| | 1FE2 | MPTS CRU | see MPTS interface doc | |
| | 1FE4 | MPTS CRU | see MPTS interface doc | |
| | 1FE6 | MPTS CRU | see MPTS interface doc | |
| | 1FE8 | MPTS CRU | see MPTS interface doc | |
| | 1FEA | MPTS CRU | see MPTS interface doc | |
| | 1FEC | MPTS CRU | see MPTS interface doc | |
| | 1FEE | MPTS CRU | see MPTS interface doc | |
| MMI_Out | | display output | 9 sequential addresses | |
| MMI_Ctl_Wd | | MMI control word | MS 7 bits=control word | |
| Map_Stack | | Bottom of "Map Registers Save" Stack | | |

## INTERFACE CONTROLLER

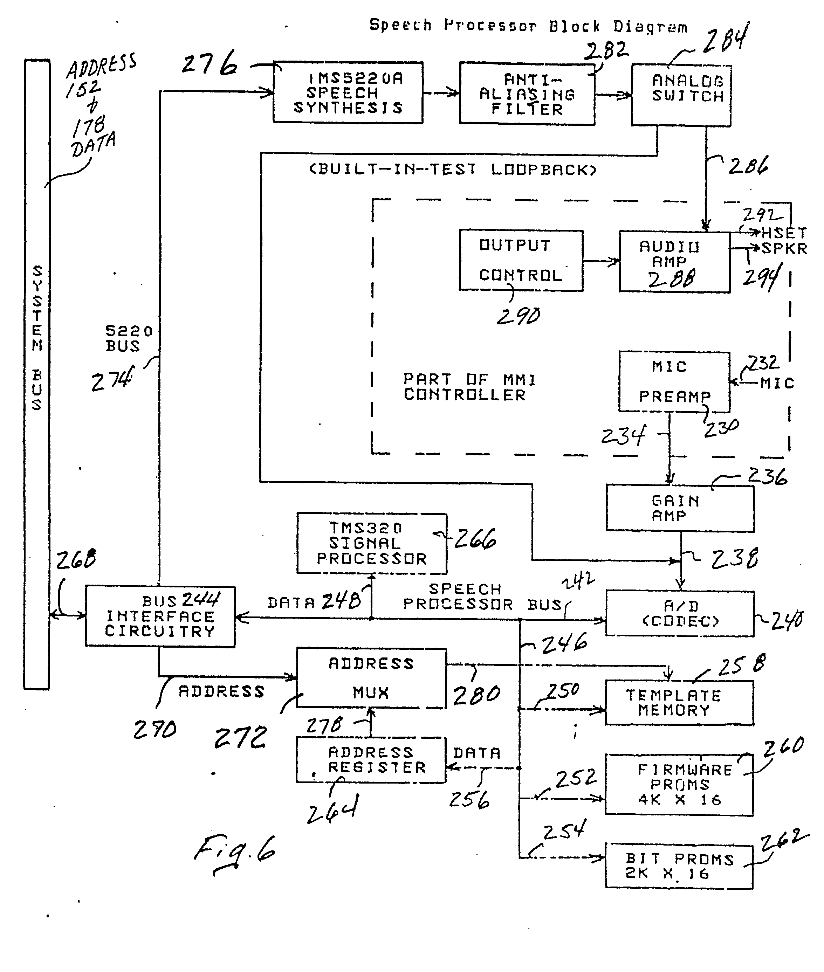

The interface controller 34 (Fig. 2) which is an extension of the host processor 32 includes an interrupt/status shift register buffer 200 (Fig. 5) connected by the interrupt lead 202 (Fig.s 4 & 5) and data bus lead 182, respectively, to the interrupt controller 118 (Fig. 4) and data buffer 174.

An address decoder 204 (Fig. 5) is connected by lead 146, 148, 152 and 154 (Fig. 4) shown collectively as lead 205 on Figure 5 to receive the expanded 24 bit address of the mapper 116 (Fig. 4). The address decoder 204 (Fig. 5) is connected by leads 206 and 208, respectively, to the interrupt/status shift register buffer 200 and to differential line drivers 210. The differential line drivers 210 are connected by lead 126 to the CRU out/dock output of the data processor 96 (Fig. 4). The output terminals of the differential line drivers 210 are connected by leads 214 and 216 of cable 42 (Fig. 1) to differential line receivers 218 (Fig. 8) of the man/machine interface (MMI) controller 50 (Fig. 3). The MMI controller 50 has differential line drivers 220 connected by leads 222 and 224 of cable 42 to differential line receivers 226 (Fig. 4). The differential line receivers 226 are connected by lead 228 to the interrupt/status shift register buffer 200.

The interface controller 34 (Fig. 2) provides the decoding, buffering and drive circuitry necessary for the host processor 32 to communicate with the man/machine interface (MMI) 38 (Fig. 3). Output to the MMI 38 is through the CRU out/clk lines 126. While the status of the MMI is communicated to the host processor through the interrupt lead (KEYINT) 202 and the memory mapped register (hereinafter described). A key interrupt signal is generated each time the user operates any key of the keypad or plugs in the headset. The content of the MMI memory mapped register is updated at each transmission.

Operation of the interface controller link involves the execution of three multibit CRU instructions (LDCRI). One transmission sequence, for example, is as follows:

Control - 7 bit code defined as follows:

      Bit 1 = 0        Start/Identification
      Bit 2 = 0        Start/Identification
      Bit 3 = 1        Start/Identification
      Bit 4 = 0        Status Type = Keys
      Bit 4 = 1        Status Type = Display
      Bits 5,6,7       Display Controller Codes

X Address - 9 bit X address (coordinate) on the display

Y Address - 9 bit Y address (coordinate) on the display During the transmission of the above sequence, the MMI status register 200 is updated with the data of the type specified by the previous control bit 4. The register is a one byte memory mapped register. The bit definitions are as follows:

Keys -    Bit  9 =     Display clear to send
          Bit 10 =     Headset status
          Bits 11-14 = Keypad status
          Bit 15 =     Test
Display - Bit  9 =     Display clear to send
          Bit 10 =     Headset status
          Bits 11-14 = Display status
          Bit 15 =     Test

### SPEECH PROCESSOR

The speech processor 36 (Fig. 2) comprises a speech recognition section and a speech synthesis section.

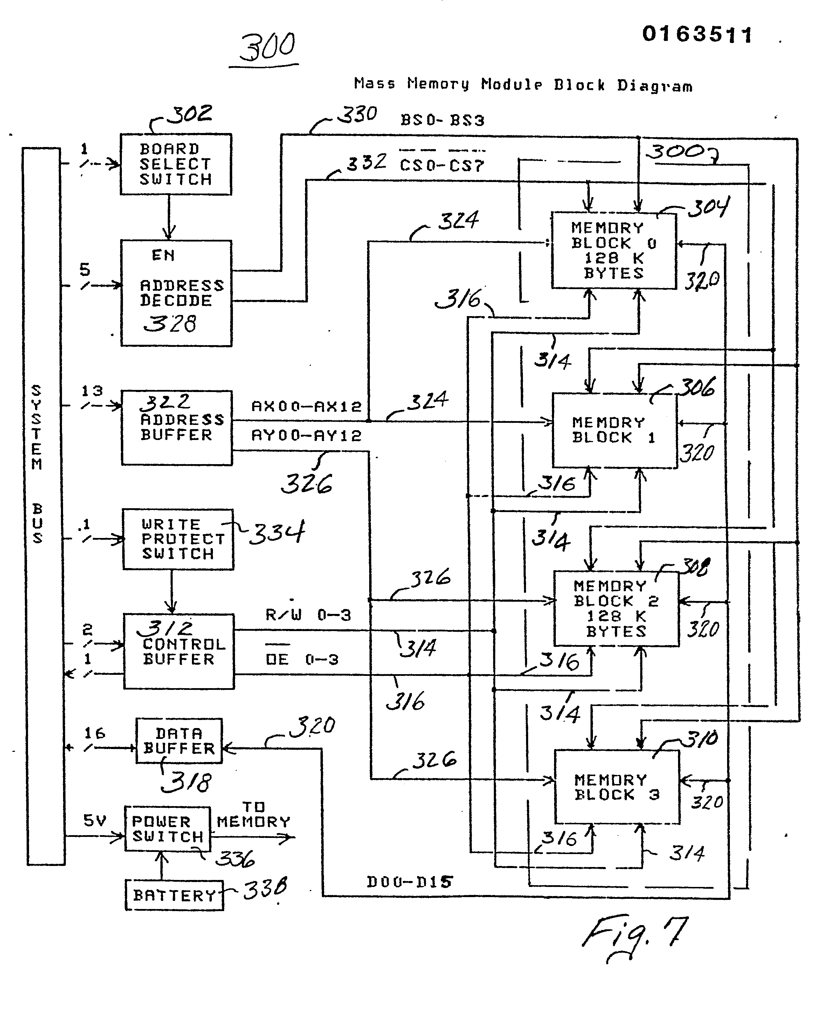

The speech recognition section includes as part of the man/machine interface (MMI) controller 50 (Fig. 3) a microphone preamplifier 230 (Fig. 6) connected by lead 232 to a microphone jack and by lead 234 to a gain amplifier 236. The gain amplifier 236 is connected by lead 238 to an analog to digital A/D coder/decoder 240. The coder/decoder 240 is connected by speech processor/data transceiver bus 242 to bus interface circuitry 244 and to the junctions of busses 246 and 248.

Bus 246 is connected by busses 250, 252, 254 and 256, respectively, to a template memory 258, firmware programmable read only memory (PROMS) 260, bit PROMS 262 and address

16

register 264. Whilst, bus 248 is connected to the signal processor 266 such as the TMS 320 speech processor sold by Texas Instruments Incorporated.

The bus interface circuitry is connected by leads 164 and 178 to the address and data buffers 154 and 174 (Fig. 4). The bus interface circuitry 244 (Fig. 6) divides the addresses and data and inputs the addresses by lead 270 to an address multiplexer 272 inputs the data through lead 248 to signal processor 266. The circuitry 244 also inputs the addresses and data to transceiver bus 274 to the speech synthesis chip 276. The address multiplexer 272 also has an input terminal by lead 278 to address register 264 and an output terminal connected by lead 280 to the template memory 258.

The speech synthesis section includes the speech synthesis chip 276 having an output terminal connected to an anti-aliasing filter 282. The anti-aliasing filter 282 is connected to an analog switch 284. The analog switch is connected by lead 286 to an audio amplifier 288. The audio amplifier is connected to an output controller 290 and by leads 292 and 294, respectively, to the headset jack and speaker 46 (Fig. 3).

Speech recognition is performed entirely by the speech processor 36 (Fig. 2) using speaker dependent recognition templates. The creation of speaker-dependent reference patterns (template enrollment) is directed by the host processor. The host processor monitors and controls the speech processor through status and control registers and an interrupt. The speech processor supports interrupt and polled interfaces; recognition of a command activates an interrupt similar to a keypad interrupt.

The microphone, which may be, for example, integrated with a headset inputs on lead 232 (Fig. 6) analog audio signals to the preamplifier 230 and gain amplifier 236 which amplifies the analog signals to a working level for the A/D CODEC 240. The CODEC is, for example, an eight bit CODEC having an 8KHz conversion rate. The CODEC provides a dynamic range comparable to thirteen linear bits in an eight bit word.

The signal processor 266 is, for example, a single TMS 320 signal processor sold by Texas Instruments Incorporated which when requested by the host processor performs the speech pattern analysis required to compare the incoming speech with the templates stored in template memory 258. The template memory is, for example, eight 4K x 4 CMOS static RAMS.

The bus interface circuitry 244 provides communications with the host processor and the dual ported template memory-accessible to the host and speech processors. The dual ported template memory 258 allows data and information transfers between the speech processors. The speech processor 266 is controlled by the host processor through both interrupt and polled application.

The speech synthesis section of the speech processor generates verbal output of the text presented on the MMI when invoked. Speech recognition overrides speech synthesis when both are active. The host processor uses text-to-speech rules stored in eight CMOS EPROMS to convert ASCII text to allophone strings. The linear predictive coding (LPC-10) technique is used. The synthesis processor which is, for example, a TMS 5220A voice synthesizer processor has its audio output filtered in filter 282 amplified in amplifier 288 and sent to either a headset or a speaker. The audio output device is selected via an external switch located on the MMI.

The code from the host processor is loaded into a first in/first out (FIFO) buffer on the TMS 5220A speech synthesizer pursuant to an interrupt through the READY output.

MASS MEMORY MODULE

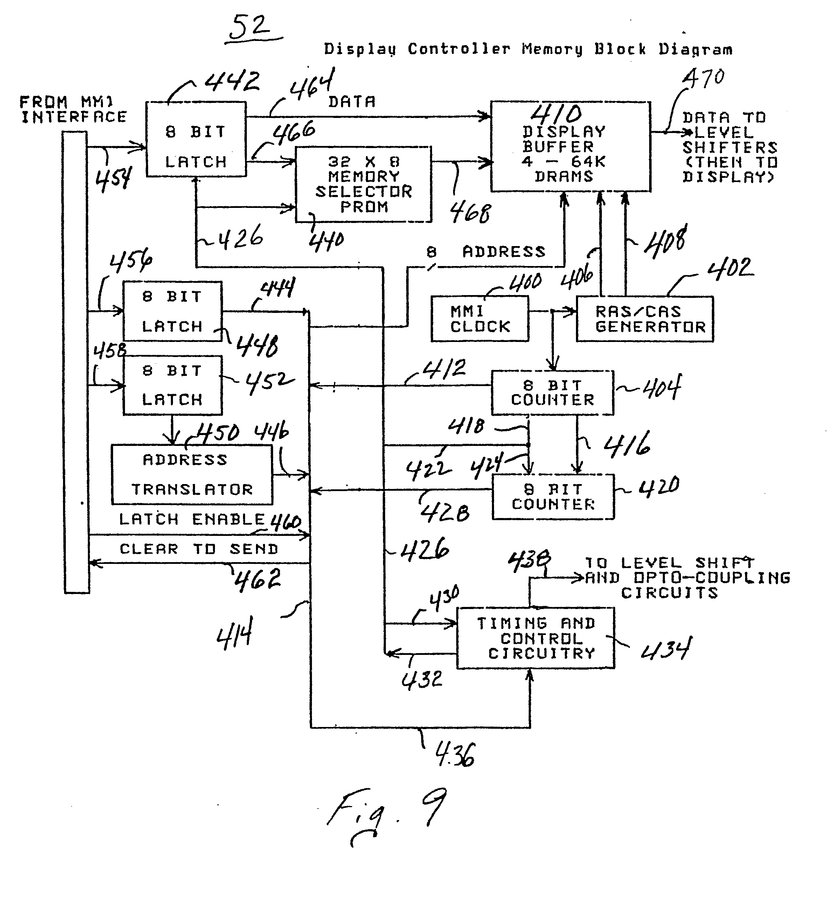

The mass memory module 28 (Fig. 2) consists of a memory 300 (Fig. 7) and its interface through bus 58 to the host processor 32, interface control 34 and speech processor 36. The memory 300 has two identical boards (expandable to four boards). Each board has one quarter mega byte of memory. A

0163511

18

board select switch 302 is used by the host processor for board selection. As the boards are identical only one is described.

The memory 300 (Fig. 7) includes four memory blocks 304, 306, 308 and 310. A control buffer 312 has read/write terminals (0-3) and output enable terminals ($\overline{OE}$0-3) connected, respectively, to the read/write terminals and output enable terminals of memory blocks 304, 306, 308 and 310. A data buffer 318 is connected by bus 320 to the DOO-Dl5 pins of memory blocks 304, 306, 308 and 310. An address buffer 322 has its AX00-AX12 terminals connected by bus 324 to memory blocks 304 and 306 and its AYOO-AYl2 terminals connected by bus 326 to memory blocks 308 and 310. Finally an address decoder 328 has its block select (BSO-BS3) and (chip select) CSO-CS7 terminals connected by busses 330 and 332, respectively, to the memory blocks 304, 306, 308 and 310.

The address decoder 328 has its enable terminal connected to the board select switch 302 and the controll buffer 312 is connected to a write protect switch 334 for controlling, respectively, board selection for address and controlling the write function, i.e., the memory can be read but not altered. Finally a power switch 336 is connected to a battery 338 and a separate power line for power selection. The battery provides a backup source of power to maintain the contents of the memory 300.

MAN/MACHINE INTERFACE CONTROLLER

The man/machine interface controller 50 (Fig. 3) performs three primary functions, namely, it receives through cable 42 and decodes data from the interface controller 34 (Fig. 2); it codes and transmits keyboard status; and it amplifies the speech input/output.

The man/machine interface controller 50 (Fig. 8) has its differential line receivers 218 connected by leads 214 and 216 and its differential line drivers 220 connected by leads 222 and 224, respectively to the host processor's interface controller's differential line drivers 210 (Fig. 5) and

differential line receivers 226. The differential line receivers 218 (Fig. 8) are connected by lead 350 to the junction of a timing logic circuit 352 and shift register 354. Shift register 354 has its output terminals connected by bus 70 to the display controller 52 (Fig. 3); while the timing logic 352 (Fig. 8) has outputs connected by leads 356 and 358, respectively, to shift register 360 and multiplexer 362. Multiplexer 362 has its input terminals connected, respectively, by leads 72 and 78 (Fig. 3) to the display 44 and keypad 48 for status determinations, and its output connected by lead 364 to shift register 360.

The man/machine interface controller as previously stated in the description of Fig. 6 has the audio preamplifier 230 connected by lead 232 to the microphone and by lead 234 to the gain amplifier 236 (Fig. 6). Also the speech control which includes the output control 290 and audio amplifier 288 is connected by lead 286 to receive the speech and output it, selectively, through leads 292 and 294 to headset and speaker.

The serial interface with the host processor 32 contains the timing logic circuitry 352 for clocking in the display data and clocking out the man/machine interface status. A serial to parallel converter 354 assembles the data and drives a 24 bit parallel interface with the display controller 52 (Fig. 3). A data available line indicates when the 24 bit bus is valid. A 512 x 352 line display configuration dictates transmission of nine bits of column and nine bits of row address information per transmission. A seven bit control word from the host processor determines the type of display and status. The keypad status is stored, buffered and transmitted to the host processor through an encoder which is, for example, a single MOS keyboard encoder.

DISPLAY UNIT

The display 44 (Fig. 3) is, for example, an electoluminescent flat panel display on a driver board. The display is for example a 512 row by 352 column X-Y addressed matrix. Alternate columns and rows are brought to the opposite edges of the glass and gold plated. Connection to the glass is made with metalized Kapton flex circuitry integrated with a multilayer circuit board upon which the chip carrier packaged drivers are mounted.

The display controller 52 includes a bit mapped memory 410 (Fig. 9) and circuit to read its contents four bits at a time to the panel. The memory is accessible from the man/machine interface 14 and host processor 32 for updating or clearing from a 24 bit parallel interface. The display controller develops the high voltage panel address and refresh signals required to activate the display panel.

The display controller 52 includes a man/machine interface clock 400 connected to the clock terminals of an RAS/CAS (Row Access/Column Access) generator 402 and a counter 404. The RAS/CAS generator 402 is connected by leads 406 and 408 to the display buffer and DRAMS (bit mapped memory) 410. Counter 404 is connected by lead 412 to memory address bus 414 and by leads 416 and 418, respectively, to a counter 420 input and junction of leads 422 and 424. Leads 422 and 424 connect the counter 404, respectively, to a control bus 426 and counter 420. Counter 420 is also connected by lead 428 to the memory address bus 414.

The control bus 426 has an output lead 430 and an input lead 432 connected to timing and control circuitry 434. The timing and control circuitry 434 is also connected by the memory address bus 414 and provides an output on lead 438 to level shift and opto-coupling circuits.

The control bus 426 also provides control signals to the control terminals of a memory selector PROM 440 and to a latch 442. The memory address bus 414 is also connected by leads 444 and 446, respectively, to the outputs of latch 448 and address translater 450. The address translator 450 is also connected to the output of a latch 452. The latches 442, 448 and 452 have input terminals connected by leads 454, 456 and 458 of bus

21

70 to the man/machine interface controller 52 (Fig. 3). Bus 70 also includes a latch enable lead 460 and a "clear to send" lead 462 connected to the memory address bus 414.

The latch 442 has output leads 464 and 466 connected, respectively, to the display buffer 410 and memory selector PROM 440. The memory selector PROM is connected by lead 468 to the bit mapped memory 410. The output of the bit mapped memory 410 is connected by lead 470 to data to level shifters (not shown) and on to the display 82.

The bit map memory 410 is used to store and activate the appropriate pixels on the screen. The memory 410 includes four DRAMS to achieve a 12 MHz data rate for a 60 Hz display refresh rate. The opto-coupling and level shift circuits are used to convert data and logic signals to CMOS levels for CMOS type drivers. The drivers may be, for example, Texas Instruments Incorporated SN 75551 and SN 75552 scan drivers on the display columns and SN 75553 and SN 75554 data drivers on the display rows. The data drivers are cascaded to provide four 128 bit shift registers for transfer of the pixel data from the bit-map memory to the display, one column at a time. The scan drivers apply a sub-threshhold voltage sequentially to each column which sums with "ON" data lines to light selected pixels. All columns are simultaneously refreshed at the end of each scan.

Although a single embodiment of the invention has been described, it will be apparent to a person skilled in the art that various modifications to the details of construction shown and described can be made without departing from the scope of this invention.

CLAIMS

1. A job performance instruction delivery system comprising: a man/machine interface device means, an instruction delivery device means and connector means having spaced first and second ends said man/machine interface device means operably connected to the first end of the connector means for selectively transmitting and receiving information through the connector means and said instruction delivery device means operatively connected to the second end of the connector means for selectively receiving and transmitting information through the connector means whereby the man/machine interface device means may be positioned at a job site remote to the instruction delivery device means for communication therebetween.

2. A job performance instruction delivery system according to claim 1 further comprising a portable case for housing the instruction delivery device means, man/machine interface device means, and connector means whereby the job performance instruction delivery system may be carried to the job, the man/machine interface device means removed from the case and set up for operation.

3. A job performance instruction delivery system according to claim 1 wherein the man/machine interface device means comprises a control means, a keypad, speaker and display, said control means operatively connected to the keypad for receiving commands and to the speaker and display means for selectively transmitting audio and visual signals for audible and visual display.

4. A job performance instruction delivery system according to claim 3 wherein the man/machine interface means further includes a headset means operatively connected to the man/machine interface controller for receiving oral communications.

5. A job performance instruction delivery system according to claim 1 wherein the instruction delivery device means comprises a host processor means for controlling operation of the instruction delivery system interface control means, speech processor means and memory means, said host processor means, interface control means, speech processor means and memory means operatively interconnected for transceiver communication therebetween and said interface control means and speech processor means operatively connected to the man/machine interface means for communication therewith.

6. A job performance instruction delivery system according to claim 5 wherein the speech processor means includes a speech synthesizer means for synthesizing audio signals for the speaker.

7. A job performance instruction delivery system according to claim 3 wherein the man/machine interface means further includes a microphone means operatively connected to the man/machine interface controller for oral communication with the instruction delivery device means.

8. A job performance instruction delivery system according to claim 7 wherein the speech processor means includes a speech recognition means for detecting valid oral commands for the host processor.

24    0163511

9. A job performance instruction delivery system according to claim 5 wherein the memory means includes a memory connector means for facilitating the exchange of memories for job selection.

10. A job performance instruction delivery system comprising: memory means including job menu and job performance information, speech recognition and synthesis means, control means, and input/output means, said memory means operatively connected to the control means for selectively providing job menu information and job performance information, said control means operatively connected to the memory means for controlling memory means response, said speech recognition means operatively connected to the control means for electrical communication with the memory means, and said input/output means operatively connected to the control means and speech recognition and synthesis means for selectively inputting electrical and oral commands to the memory and for selectively outputting oral and visual commands whereby visual or oral or both job performing instructions are provided.

Fig. 1

0163511

Fig. 2

Fig. 3

0163511

**Host Processor Block Diagram**

32

Fig. 4

Interface Controller Block Diagram

Fig.5

Figure 4-6  Man Machine Interface Controller

Fig.8

Speech Processor Block Diagram

Fig. 6

**300**

Mass Memory Module Block Diagram

Fig. 7

52

Display Controller Memory Block Diagram

Fig. 9

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PROCEEDINGS OF THE IEEE 1981 NATIONAL AEROSPACE AND ELECTRONICS CONFERENCE, NAECON 1981, 19th-21st May 1981, IEEE Aerospace and Electronic Systems Society, vol. 3, pages 1382-1389, Dayton, US; S.R.OLSON et al.: "Education, training, and maintenance aiding: New concepts and solutions" * Figures 3,4; page 1386, column 1, line 34 - column 2, line 53 * | 1-3,5-8,10 | G 09 B 19/00 |
| A | FR-A-2 488 008 (SOCIETE DE REALISATIONS EN INFORMATIQUE ET AUTOMATISME S.A.) * Figure 4; claims 1-4 * | 1,3 | |
| A | US-A-3 992 786 (GREENBERG et al.) * Figure 1; column 2, lines 20-22 * | 2 | TECHNICAL FIELDS SEARCHED (Int. Cl.4)<br><br>G 09 B |
| A | GB-A-1 419 064 (CLARKE) * Page 1, lines 43-53; page 2, lines 59-70 * | 4 | |
| A | GB-A-2 110 455 (RJP ELECTRONIC LTD.) * Abstract; claim 1 * | 9 | |

The present search report has been drawn up for all claims

| Place of search | Date of completion of the search | Examiner |
|---|---|---|
| THE HAGUE | 22-07-1985 | BAILLET B.J.R. |